# EUROPEAN PATENT APPLICATION

(11) **EP 1 734 363 A1**
(43) Date of publication of application: **20.12.2006**
(21) Application number: 05727110.8
(22) Date of filing: 24.03.2005
(51) Int. Cl.: G01N 30/60, G01N 30/06, G01N 30/46

(54) **STATIONARY PHASE EXTRACTION CARTRIDGE**

(30) Priority: 31.03.2004 JP 2004105309; 06.10.2004 JP 2004293613
(71) Applicant: Saika Tech. Institute Foundation, Wakayama-shi, Wakayama 6408341 (JP)
(72) Inventor: SASANO, Ryoichi, Wakayama-shi, Wakayama 6408341 (JP); KIJI, Kazuaki, Wakayama-shi, Wakayama 6408341 (JP); NAKANISHI, Yutaka, Wakayama-shi, Wakayama 6408341 (JP)
(74) Representative: Vossius & Partner
(86) International application number: PCT/JP2005/005324
(87) International publication number: WO 2005/098416

(57) **Abstract**

An inflow side frit (3), a stationary phase filler (4), and an outflow side frit (5) are installed in a cylindrical cartridge body (1A) from the upper side, a stopper part (1f) supporting the outflow side frit is formed at the inner surface bottom end of the cartridge body (1A), and a fitting part capable of holding the inserted state of the lower end of the other cartridge body (1A) inserted from the upper end of the cartridge body (1A) to a specified position is formed on the cartridge body (1A). The fitting part comprises an inside tapered surface (1g) formed on the inner surface of the cartridge body (1A) on the inserted side and having a diameter increased toward the upper side and an outside tapered surface formed on the outer surface of the cartridge body on the insert side and having a diameter increased toward the upper side.

## Description

### BACKGROUND OF THE INVENTION

### Technical Field

The present invention relates to a stationary phase extraction cartridge used for preparing a specimen analyzed by liquid chromatography and gas chromatography or the like.

### Background Art

The above stationary phase extraction cartridge is provided with an inflow side frit, a stationary phase filler and an outflow side frit from the upper side in a cylindrical cartridge body having an opened upper end and an opened lower end. A specimen is injected into the stationary phase extraction cartridge thus constituted, for example, from a syringe (injector), and thereby a target component is held by the stationary phase filler out of the injected specimen. The condensed target component can be collected by flowing eluate into the stationary phase filler holding the target component. The stationary phase extraction cartridge has been already proposed, which is constituted by a cylindrical cartridge body storing the inflow side frit, the stationary phase filler and the outflow side frit and a discharge cylindrical tip part having a smaller diameter than that of the cartridge body and provided at a discharge side edge of the cartridge body (for example, see Patent Reference 1).

### [Patent Reference 1]

Japanese Unexamined Patent Application No.2002-316002 (see FIG. 1)

### SUMMARY OF THE INVENTION

### Problems to be Solved by the Invention

In the above Patent Reference 1, a dead space exists in a bowl type (a taper type located lower toward the center side) step part for connecting the discharge side edge of the cartridge body with one end of the discharge tip part of the side corresponding to the discharge side edge. Thereby, a specimen and a solution are accumulated in the dead space, and the concentration of the target component is disadvantageously reduced. Also, a problem has been sometimes generated at the time of the extraction of the next target component by the cause of the accumulated specimen and solution.

Also, a plurality of kinds (two kinds) of stationary phase extraction cartridges provided with different stationary phase fillers are provided when a plurality of kinds (for example, two kinds) of target components to be held from the specimen exist and when impurities in the specimen are removed. The specimen from an injector is injected into, for example, a first stationary phase extraction cartridge, discharged matter (which is not held in the stationary phase filler) discharged from the stationary phase extraction cartridge is received in another container such as an injector, and the received dischargedmatter is injected into a second stationary phase extraction cartridge. Thus, the work requires much labor.

The present invention has been accomplished in view of the foregoing and other problems. It is an object of the present invention to provide a stationary phase extraction cartridge enabling the fitting (stacking) of a plurality of stationary phase cartridges to not only minimize the accumulation of a specimen and a solution but also to remove impurities and rapidly obtain a plurality of target components.

In the present invention, so as to solve the problems, a stationary phase extraction cartridge provided with an inflow side frit, a stationary phase filler and an outflow side frit from the upper side in a cylindrical cartridge body having an opened upper end and an opened lower end, comprises: a stopper part formed on the inner surface of the lower side of the cartridge body and projected inward to continuously or intermittently support the outer peripheral edge of the outflow side frit, or a holding part formed on the inner surface of the lower side of the cartridge body and constituting a tapered part having a diameter decreased toward the lower side to hold the outflow side frit; and a fitting part formed on the cartridge body and capable of holding the inserted state of the lower end of the other cartridge body inserted from the upper end of the cartridge body to a specified position, wherein the fitting part comprises an inside tapered surface formed in at least a specific range of the inner surface of the cartridge body on the inserted side and having a diameter increased toward the upper side and an outside tapered surface formed in at least a specific range of the outer surface of the cartridge body on the insert side and having a diameter increased toward the upper side, and both the inside tapered surface and the outside tapered surface have substantially the same oblique angle.

As described above, only the stopper part continuously or intermittently supporting the outer peripheral edge of the outflow side frit is formed on the lower end of the cartridge body. Or only the tapered part having a diameter decreased toward the lower side is formed on the inner surface of the lower side of the cartridge body to constitute the holding part for holding the outflow side frit. Thereby, the stopper part and the holding part do not form a large dead space, and the accumulation of the specimen and solution in the stopper part and the holding part can be minimized.

Also, a plurality of stationary phase extraction cartridges provided with the stationary phase filler capable of holding impurities and the target component can be fitted by using the inner and outer tapered surfaces having almost the same oblique angle when the impurities are sought to be removed or when a plurality of kinds of target components are held. The impurities to be removed and a plurality of kinds of target components to be held can be held in one injection work by injecting the specimen via the syringe (injector) or the like into the stationary phase extraction cartridges of the fitted state.

The inner surface of the cartridge body located below may be continued to the inner surface of the cartridge body located above so as to be substantially flush therewith in the fitted state of the two cartridge bodies.

The whole amount of the specimen can be smoothly moved through the cartridge body without generating a step part on the inner surfaces of the cartridge bodies fitted in the vertical direction at the time of injecting the specimen and without making a part or the like of the specimen stay in the step part.

The cartridge body may comprise a lower side portion capable of being inserted and fitted into the other cartridge body and an upper side portion having an outside diameter projected outward from the lower side portion, and an abutting step part for regulating the inserted position of the cartridge body located above may be formed on the inner surface of the cartridge body located below so that a clearance is formed between a step part and the upper end of the cartridge body located below in the fitted state of the two cartridge bodies, the step part formed at a boundary part of the lower side portion and upper side portion of the cartridge body located above.

The upper end opening of the cartridge body may be set larger than the outside diameter of the lower end of the cartridge body, wherein the inner surface of the cartridge body between the upper end opening thereof and the abutting step part located below is formed into a tapered surface having an inner diameter decreased toward the abutting step part, and wherein the outer surface of the lower side portion of the cartridge body is formed into a tapered surface having an outside diameter increased toward the step part from the lower end.

The stopper part may include a plurality of projected parts projected inward at a prescribed interval in the circumferential direction of the inner surface of the lower end of the cartridge body.

A short cylindrical lower end portion provided with the stopper part may be removably attached to the lower end of the cartridge body.

A flange part may be formed on the upper end of the cartridge body.

### Effects of the Invention

Only the stopper part continuously or intermittently supporting the outer peripheral edge of the outflow side frit is formed on the lower end of the cartridge body. Or only the tapered part having a diameter decreased toward the lower side is formed on the inner surface of the lower side of the cartridge body to constitute the holding part for holding the outflow side frit. Thereby, the stopper part and the holding part do not form a large dead space, and the accumulation of the specimen and solution in the stopper part and the holding part can be minimized, making it possible to extract the target component to as planned.

Also, the impurities can be removed and a plurality of kinds of target components can be held by only fitting a plurality of stationary phase extraction cartridges provided with the stationary phase filler capable of holding the impurities and the target component and injecting the specimen. The impurities to be removed and the plurality of kinds of target components to be held can be rapidly held in one injection work, and the work can be finished. When the cartridge body is made of a synthetic resin, the cartridge body is also easily formed into any shape, and the cartridge body made of the synthetic resin has an advantage in view of the manufacture side.

The inner surface of the cartridge body located below is continued to the inner surface of the cartridge body located above so as to be substantially flush therewith in the fitted state of the two cartridge bodies. Thereby, the whole amount of the specimen can be smoothly moved through the cartridge body without generating the step part on the inner surfaces of the cartridge bodies fitted in the vertical direction at the time of injecting the specimen and without making a part of the specimen stay in the step part.

The cartridge body comprises the lower side portion capable of being inserted and fitted into the other cartridge body and the upper side portion having the outside diameter projected outward from the lower side portion, and the abutting step part for regulating the inserted position of the cartridge body located above is formed on the inner surface of the cartridge body located below so that the clearance is formed between the step part and the upper end of the cartridge body located below in the fitted state of the two cartridge bodies, the step part formed at the boundary part of the lower side portion and upper side portion of the cartridge body located above. Thereby, the fitted state of the two cartridge bodies vertically located can be easily removed by hooking a finger to the clearance. In addition, the formation of the clearance can be realized only by forming the abutting step part on the inner surface of the cartridge body, and the constitution has an advantage in view of the manufacture side as compared with the fixation of the abutting part independently formed in the cartridge body.

The upper end opening of the cartridge body is set larger than the outside diameter of the lower end of the cartridge body. The inner surface of the cartridge body between the upper end opening thereof and the abutting step part located below is formed into the tapered surface having the inner diameter decreased toward the abutting step part. The outer surface of the lower side portion of the cartridge body is formed into the tapered surface having the outside diameter increased toward the step part from the lower end. Even if the position of the upper cartridge body to the lower cartridge body is slightly shifted, both the cartridge bodies can be rapidly fitted, and the insertion work can be easily and rapidly performed to attain the acceleration of the extraction work of the target component.

The stopper part includes a plurality of projected parts projected inward at a prescribed interval in the circumferential direction of the inner surface of the lower end of the cartridge body. Thereby, the accumulation of the specimen and solution in the stopper part can be further suppressed as compared with the case where the stopper part is formed over the whole area of the circumferential direction.

The short cylindrical lower end portion provided with the stopper part is removably attached to the lower end of the cartridge body. Thereby, after the lower end portion is removed, and the inflow side frit, the stationary phase filler and the outflow side frit are inserted from the discharge side edge part of the cartridge body, the lower end portion can be attached to the cartridge body. The attaching work can be easily and rapidly performed as compared with the case where the inflow side frit, the stationary phase filler and the outflow side frit are respectively inserted from the upper end opening of the long-sized cartridge body, and are moved to the lower end opening side.

When the flange part is formed on the upper end of the cartridge body, and the specimen is injected into the cartridge body in a state where the cartridge body is held by hand or in a state where the cartridge body is held by an instrument such as a holding member, the flange part can be used as a abutting prevention member so as to prevent the separation of the cartridge body from the hand or the instrument due to the accidental movement of the cartridge body to the lower side even if the holding force to the cartridge body is small, and the flange part has an advantage in view of the use.

### BRIEF DESCRIPTION OF THE DRAWINGS

FIG. 1 is a longitudinal section of a stationary phase extraction cartridge.
FIG. 2 is a perspective view of a stationary phase extraction cartridge.
FIG. 3 is a plan view of a stationary phase extraction cartridge.
FIG. 4 is a longitudinal section showing two stationary phase extraction cartridges in a vertically stacked state.
FIG. 5 is a plan view of a second stationary phase extraction cartridge.
FIG. 6 is a longitudinal section showing a third stationary phase extraction cartridge having no flange part
FIG. 7 is a longitudinal section showing the two stationary phase extraction cartridges of FIG. 6 in a vertically stacked state.
FIG. 8 is a longitudinal section showing a fourth stationary phase extraction cartridge in which a lower end part having a screw structure is removably constituted.
FIG. 9 is a longitudinal section showing a fifth stationary phase extraction cartridge in which a lower end part having a locking structure is removably constituted.
FIG. 10 shows a sixth stationary phase extraction cartridge. FIG. 10 (a) is a longitudinal section showing two stationary phase extraction cartridges in a vertically stacked state. FIG. 10 (b) is a bottom view of the stationary phase extraction cartridges while being viewed from the lower side.
FIG. 11 shows a seventh stationary phase extraction cartridge. FIG. 11 (a) is a longitudinal section showing two stationary phase extraction cartridges in a vertically stacked state. FIG. 11 (b) is a bottom view of the stationary phase extraction cartridges while being viewed from the lower side.
FIG. 12 shows an eighth stationary phase extraction cartridge. FIG. 12 (a) is a longitudinal section showing two stationary phase extraction cartridges in a vertically stacked state. FIG. 12 (b) is a bottom view of the stationary phase extraction cartridges while being viewed from the lower side.
FIG. 13 shows a ninth stationary phase extraction cartridge. FIG. 13 (a) is a longitudinal section showing two stationary phase extraction cartridges in a vertically stacked state. FIG. 13 (b) is a bottom view of the stationary phase extraction cartridges while being viewed from the lower side.
FIG. 14 shows a tenth stationary phase extraction cartridge. FIG. 14 (a) is a longitudinal section showing two stationary phase extraction cartridges in a vertically stacked state. FIG. 15 (b) is a bottom view of the stationary phase extraction cartridges while being viewed from the lower side.
FIG. 15 shows an eleventh stationary phase extraction cartridge. FIG. 15 (a) is a longitudinal section showing two stationary phase extraction cartridges in a vertically stacked state. FIG. 15 (b) is a bottom view of the stationary phase extraction cartridges while being viewed from the lower side.
FIG. 16 shows a twelfth stationary phase extraction cartridge. FIG. 16 (a) is a longitudinal section showing the stationary phase extraction cartridges in a vertically stacked state. FIG. 16 (b) is a bottom view of the stationary phase extraction cartridges while being viewed from the lower side.

### Description of the Symbols

- 1A:: cartridge body
- 1f :: stopper part
- 1F:: flange part
- 1b:: upper side portion
- 1K: upper end opening
- 1a:: lower side portion
- 1B:: inner surface
- 1:: stationary phase extraction cartridge
- 1G:: outside diameter
- 1g:: tapered surface
- 1e:: abutting step part
- 1d:: abutting step part
- 1e:: abutting step part
- 1c:: step part
- 2:: syringe
- 2A:: tip
- 3:: inflow side frit
- 4:: stationary phase filler
- 5:: outflow side frit
- 5A:: outer peripheral edge
- 6:: specimen
- 7A:: stopper part
- 7:: lower end portion
- 7B:: projected part (screw part)
- 8:: upper side body part
- 8B:: recessed part (screw part)
- S:: clearance

### DETAILED DESCRIPTION OF THE INVENTION

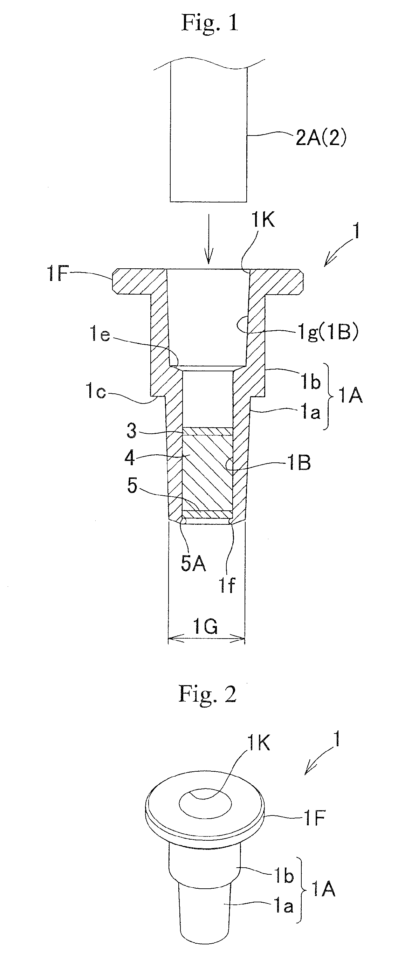

FIGS. 1 to 3 show a stationary phase extraction cartridge 1 used for preparing a specimen analyzed by liquid chromatography and gas chromatography or the like.

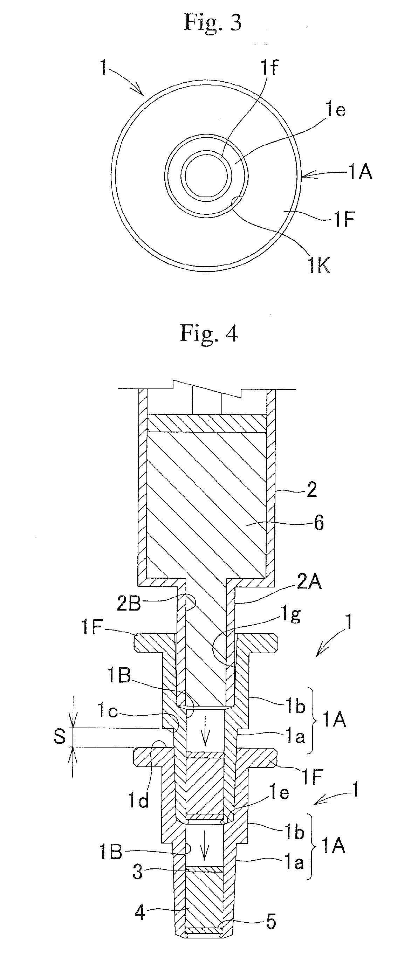

It is advantageous in the aspect of cost and use that this stationary phase extraction cartridge 1 is made of a transparent synthetic resin material (The stationary phase extraction cartridge 1 may be made of a translucent or non-transparent synthetic resin material.). However, the stationary phase extraction cartridge 1 may be made of other materials. FIG. 1 shows a state just before inserting a tip 2A of a syringe (injector) 2 into the upper end of the stationary phase extraction cartridge 1. After the tip 2A of the syringe 2 is inserted into the upper end of the stationary phase extraction cartridge 1 as shown in FIG. 4 from this state, a specimen 6 in the syringe 2 is injected, and thereby a desired target component can be held by a stationary phase filler 4 to be described later. The stationary phase extraction cartridge 1 will be held by hand or will be held and used by an instrument such as a holding member.

The stationary phase extraction cartridge 1 is constituted by a cylindrical cartridge body 1A having an opened upper end and lower end (The stationary phase extraction cartridge 1 may have an elliptical shape or a rectangular casing-shape or the like.). A disklike inflow side frit 3 supporting the specimen and pressing the stationary phase filler from above, and a disklike outflow side frit 5 supporting the stationary phase filler 4 which is filled with a number of granular materials are provided in sequence from the above in the cartridge body 1A. However, only one of the frits (also referred to as filter) 3, 5 can be provided and carried out in some cases.

The cartridge body 1A is constituted by a lower side portion 1a capable of being inserted and fit into the other cartridge body 1A and an upper side portion 1b having an outside diameter projected outward from the lower side portion 1a. In the fitted state of the two cartridge bodies 1A, 1A shown in FIG. 4, an abutting step part 1e for regulating the inserted position of the cartridge body 1A to be inserted is formed on the inner surface of the cartridge body 1A so that a clearance S is formed between an almost horizontal step part 1c formed at the boundary part of the lower side portion 1a and upper side portion 1b of the cartridge body 1A located above, and the upper end of the cartridge body 1A located below.

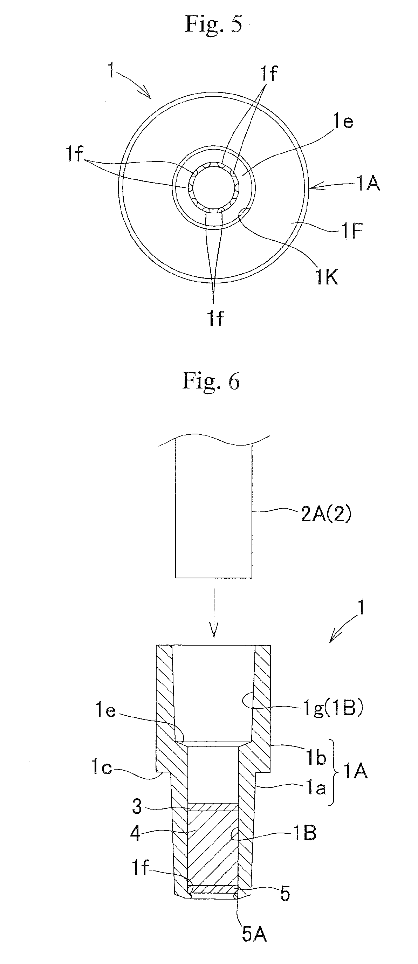

An annular ring plate-like stopper part 1f projected inward to continuously support an outer peripheral edge 5A of the outflow side frit 5 is formed on the inner surface of the lower end of the cartridge body 1A. A fitting part is formed in the cartridge body 1A, and the fitting part is a recessed part capable of holding the inserted state where the lower end of the other cartridge body 1A is inserted to a specified position of the cartridge body 1A from the upper end of the cartridge body 1A. The fitting part is formed so that the inner surface 1B of the cartridge body 1A located below is substantially flush with the inner surface 1B of the cartridge body 1A located above in the fitted state of the two cartridge bodies 1A, 1A (see FIG. 4). The fitting part is constituted by a tapered surface which is the outer surface of the lower side portion 1a and a tapered surface 1g which is the inner surface of the upper side portion 1b. The oblique angle of the tapered surface of the lower side portion 1a is the same as that of the tapered surface 1g of the upper side portion 1b, and thereby there is an advantage that the tapered surface 1a of the outer surface of the inserted cartridge body 1A and the tapered surface 1g of the inner surface of the cartridge body 1A on the inserted side can be brought into a face contact condition having no clearance over the whole area. However, the oblique angles of the inner and outer tapered surfaces can be also set as that the tapered surface 1a contacts linearly to the tapered surface 1g (For example, the tapered surface 1a contacts partially to the tapered surface 1g.)). As shown in FIG. 5, the stopper part 1f is constituted by a large number of projected parts intermittently supporting the outer peripheral edge 5A of the outflow side frit 5, and thereby there is an advantage that the specimen, the target component and an eluate or the like can be more favorably discharged. Also, although the stopper part 1f is preferably formed on the lower end of the cartridge body 1A, the stopper part 1f may be provided at any portion as long as the stopper part 1f is formed at the lower side. The lower side is referred to as the lower side of a central part of the vertical size of the cartridge body 1A.

Examples of the stationary phase fillers 4 include silikagel, alumina, octadecyl silica, sodium sulfate, a polymer exchange resin. However, the other materials may be used. The stationary phase filler 4 can be suitably selected according to impurities to be removed and the kind of the target components to be held.

The upper end opening 1K of the cartridge body 1A is set larger than the outside diameter 1G of the lower end of the cartridge body 1A, and the inner surface 1B between the upper end opening 1K of the cartridge body 1A and the abutting step part 1d located below is formed into a tapered surface having an inner diameter decreased toward the abutting step part 1e. Thereby, the lower end of one (upper side) cartridge body 1A is easily inserted into the upper end opening 1K of the other cartridge body 1A. However, the inner surface 1B may be formed into a straight surface. The outer surface of the lower side portion 1a of the cartridge body 1A is formed into a tapered surface having an outside diameter increased toward the step part 1c from the lower end of the cartridge body 1A. The oblique angle of the tapered surface of the lower side portion 1a is set equal (may be set almost equal) to that of the tapered surface of the inner surface 1B between the upper end opening 1K and the abutting step part 1d located below. The two tapered surfaces can be fitted with each other in the condition having no clearance. Herein, although the case where there is an advantage that the fixture is rapidly removed only by fitting the plurality of cartridge bodies 1A, 1A stacked in a vertical direction with each other to fix the cartridge bodies is shown, both the cartridge bodies may be more firmly able to be fixed by using a locking or the like.

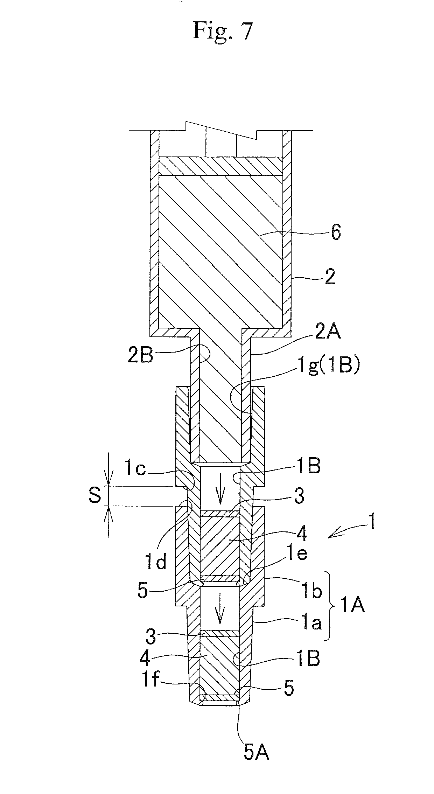

In FIGS. 1 to 4, a flange part 1F is formed on the upper end of the cartridge body 1A, and thereby there is an advantage that the flange part 1F can function as a stopper for contacting to preventing the movement to the lower side when the cartridge body 1A is held by the hand or when the cartridge body 1A is held by using the instrument. However, as shown in FIGS. 6, 7, the flange part 1F may be free. Since the other portions shown in FIGS. 6, 7 are the same as those of FIGS. 1, 4, the same portions are provided with the same numeral.

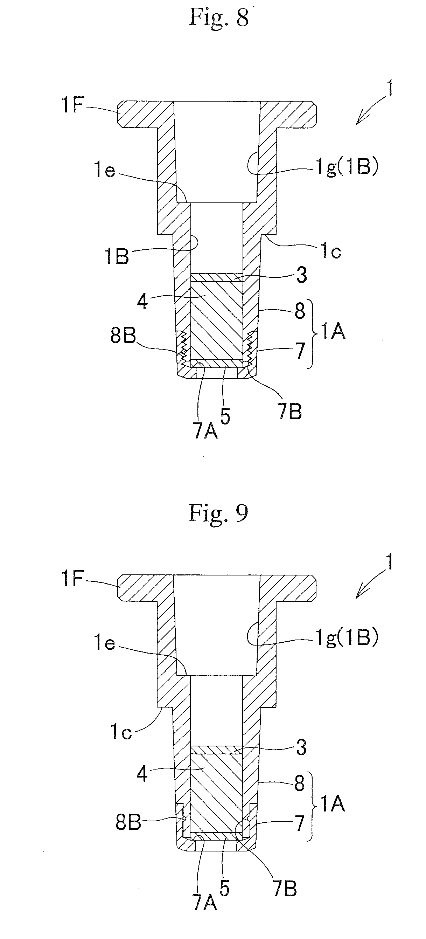

As shown in FIGS. 8, 9, the stationary phase extraction cartridge 1 may be constituted by removably attaching a short cylindrical lower end portion 7 provided with the stopper part 7A to the lower end of the cartridge body 8 in the vertical direction. Thus, the lower end portion 7 can be removed, and the inflow side frit 3, the stationary phase filler 4 and the outflow side frit 5 can be inserted and provided through the opening (lower end opening) of discharge side of the cartridge body 8. Examples of the removable structures include a screw structure and a locking structure. The screw structure includes a screw part 8B formed on the lower end outer surface of the cartridge body 8 and a screw part 7B formed on the inner surface of the lower end portion 7 so as to be screwed into the screw part 8B as shown in FIG. 8. The locking structure includes a projected part 7B formed on the inner surface of the lower end portion 7 and a recessed part 8B formed on the outer surface of the lower end of the cartridge body 8 so as to be engagingly lockable with and releasable from the projected part 7B as shown in FIG. 9. However, the other structure may be used. The projected part 7B and the recessed part 8B may be formed over the entire circumferential direction, and may be formed at one place or a plurality of places in the circumferential direction. The abutting step part 1e of FIGS. 8, 9 is different from the taper-shaped abutting step part 1e located lower toward the center side shown in FIGS. 1 to 7, and is formed in an approximately horizontal plane. Since the lower end surface of the lower end portion 7 is almost horizontal, no clearance is generated in the fitted portion when two cartridge bodies 8 are fitted with each other. Since the other portions shown in FIGS. 8, 9 are the same as those of FIGS. 1 to 7, the same portions are provided with the same numeral.

As shown in FIG. 4, after the specimen 6 in the syringe 2 is injected into the two cartridge bodies 1A, 1A fitted in the vertical direction, and the target component is held by each of the stationary phase fillers 4, 4, the fitting of the cartridge bodies 1A, 1A is removed, and the held target component is then extracted by flowing the eluate into each of the cartridge bodies 1A, 1A.

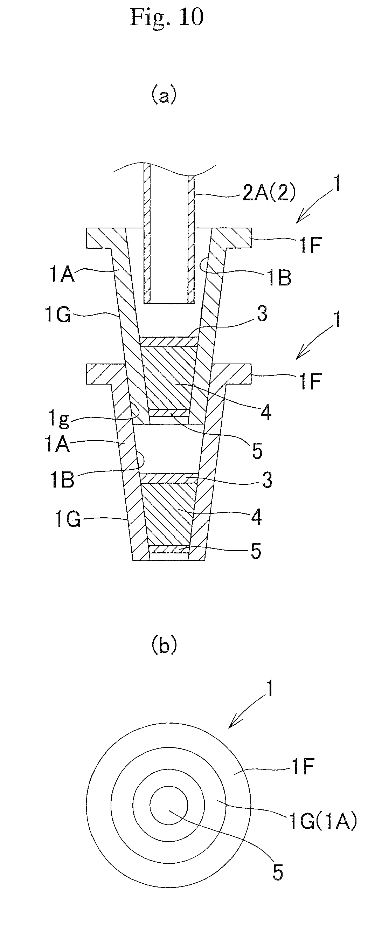

FIGS. 10(a), (b) show two stationary phase extraction cartridge 1 in which the stopper part 1f and abutting step part 1e shown in FIG. 1 are omitted in a vertically stacked state. The stationary phase extraction cartridge 1 is constituted by a cylindrical cartridge body 1A and a flange part 1F. In the cylindrical cartridge body 1A, both an outer surface 1G and an inner surface 1B have a diameter decreased toward the lower side (a diameter increased toward the upper side) and have a tapered surface having the same oblique. The flange part 1F is integrally formed with the upper end of the cartridge body 1A. Therefore, the upper and lower stationary phase extraction cartridges 1 are fitted with each other by applying the inner and outer surfaces as the tapered surface and by inserting the upper stationary phase extraction cartridge 1 into the lower stationary phase extraction cartridge 1 from the above, and the inserted position is regulated at a prescribed position, thereby constituting the fitting part capable of holding the inserted state. The fitting part is constituted by the tapered surface 1g of the upper side of the inner surface 1B of the cartridge body 1A, and the outer surface 1G formed at the lower side of the other cartridge body 1A so as to have the same oblique angle as that of the tapered surface 1g. Even in this case, the oblique angles of the inner and outer tapered surfaces can be also made different in some degree. FIG. 10 (b) is a bottom view of one stationary phase extraction cartridge 1 of FIG. 10 (a) while the stationary phase extraction cartridge 1 is being viewed from the lower side.

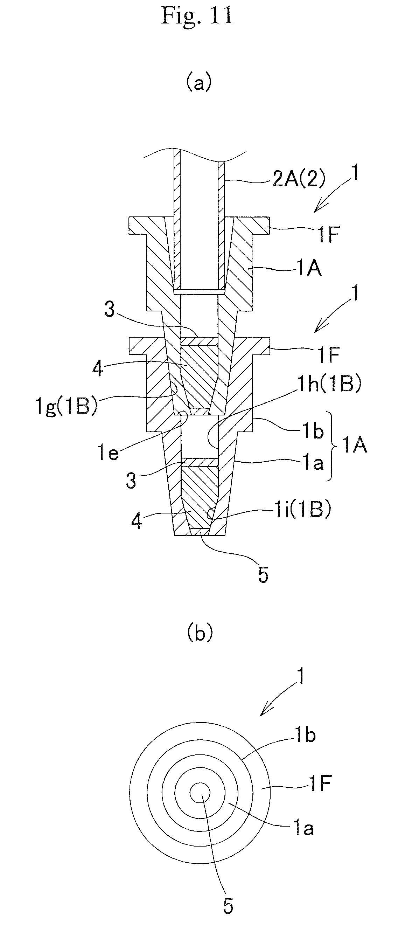

FIGS. 11 (a), (b) show the stationary phase extraction cartridge 1 which is shown in FIG. 1 and of which the stopper part 1f is omitted. That is, the inner surface 1B of the cartridge body 1A is constituted by a tapered surface 1g constituting the fitting part, a straight surface 1h extending downward from the step part 1e of the lower end of the tapered surface 1g, and a tapered surface 1i extending downward from the lower end of the straight surface 1h and having a diameter decreased toward the lower side. Therefore, since a force pressing the outflow side frit 5 to the center side is generated on the tapered surface 1i by moving the outflow side frit 5 having a larger outside diameter than that of the lower end opening to the lower end, the outflow side frit 5 can be held at the position. The outside diameter of the outflow side frit 5 to the lower end opening is set so that the outflow side frit 5 is not pulled out to the lower side from the lower end opening. Also, since the outside diameter of the outflow side frit 5 is also influenced by the quality of the material of the outflow side frit 5, the outside diameter is preferably set in view of the quality of the material or the like.

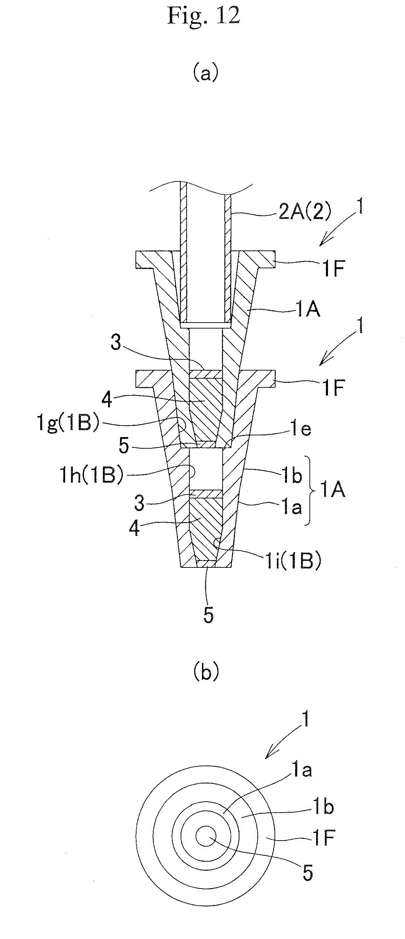

The stationary phase extraction cartridge 1 shown in FIGS. 12 (a), (b) is the same as one shown in FIGS. 11 (a), (b) except that the outer surface of the cartridge body 1A of the stationary phase extraction cartridge 1 shown in FIG. 11 (a), (b) is formed into two stages of tapered surfaces 1b, 1a having a diameter decreased toward the lower side. That is, a first upper tapered surface 1b is formed into a tapered surface having a larger angle than a second lower tapered surface 1a in the vertical direction.

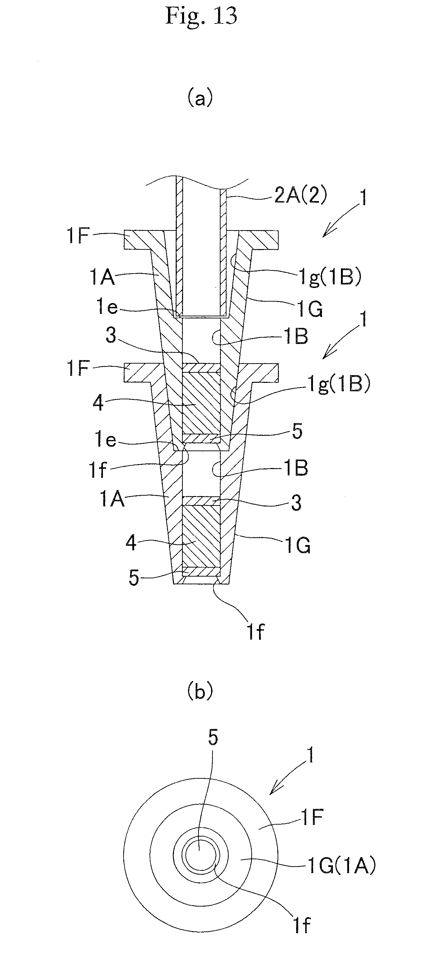

FIGS. 13 (a), (b) show a stationary phase extraction cartridge 1 in which the outer surface 1G of the cartridge body 1A of the stationary phase extraction cartridge 1 shown in FIGS. 1 to 4 is formed into a tapered surface having a diameter increased toward the upper side, and the shape of the stopper part 1f is formed into a tapered surface located at the more inner side toward the upper side. The other portions are the same.

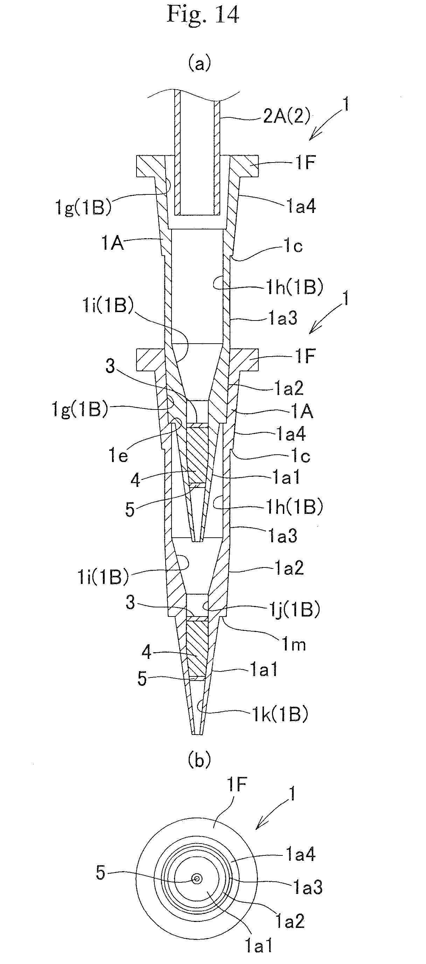

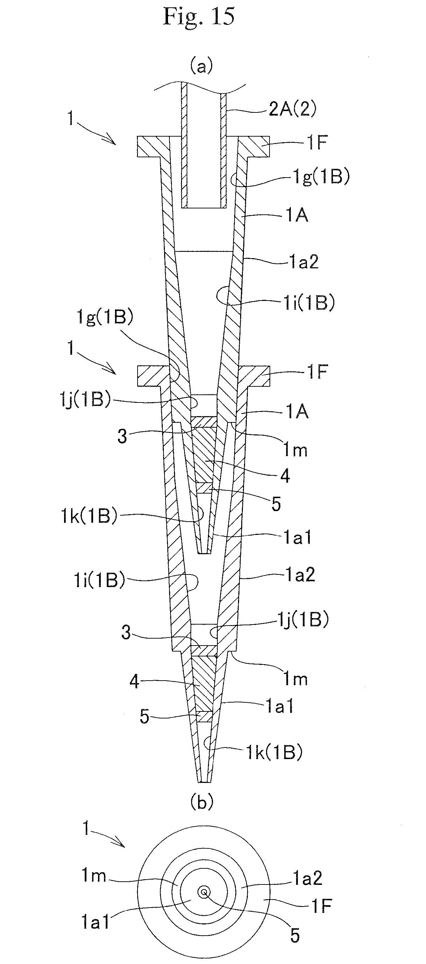

The stationary phase extraction cartridge 1 may be constituted in a pipette type as shown in FIGS. 14 (a), (b) and FIGS. 15 (a), (b). In FIG. 14, the outer surface of the cartridge body 1A is constituted by a first tapered surface 1a4 having a diameter decreased toward the upper side, a first straight surface 1a3 extending downward from a step part 1c of the lower end of the first tapered surface 1a4, and a third tapered surface 1a1 extending downward from a step part 1m of the lower end of a second tapered surface 1a2 extending downward from the lower end of the straight surface 1a3 and having a diameter decreased toward the lower side in sequence from the above. However, the other constitution may be used. Also, the inner surface of the cartridge body 1A is constituted by a first tapered surface 1g forming the fitting part, a first straight surface 1h extending downward from a step part 1e of the lower end of the first tapered surface1g, a second tapered surface 1i extending downward from the lower end of the first straight surface 1h and having a diameter decreased toward the lower side, a second straight surface 1j extending downward from the lower end of the second tapered surface 1i, and a third tapered surface 1k extending downward from the lower end of the second straight surface 1j and having a diameter decreased toward the lower side. However, the other constitution may be used. In this case, the outflow side frit 5 can be held by the third tapered surface 1k.

The shape in FIGS. 15 (a), (b) is made simpler than one of FIG. 14 (a), (b). That is, the outer surface of the cartridge body 1A is constituted by a first tapered surface 1a2 having a diameter decreased toward the lower side, and a second tapered surface 1a1 extending downward from the step part 1m of the lower end of the first tapered surface 1a2 in sequence from the above. However, the other constitution may be used. Also, the inner surface 1B of the cartridge body 1A is constituted by a first tapered surface 1g forming the fitting part, a first straight surface 1h extending downward from the step part 1e of the lower end of the first tapered surface 1g, a second tapered surface 1i extending downward from the lower end of the first straight surface 1h and having a diameter decreased toward the lower side, a second straight surface 1j extending downward from the lower end of the second tapered surface 1i, and a third tapered surface 1k extending downward from the lower end of the second straight surface 1j and having a diameter decreased toward the lower side. However, the other constitution may be used. In this case, both the outflow side frit 5 and the inflow side frit 3 can be held by the third tapered surface 1k.

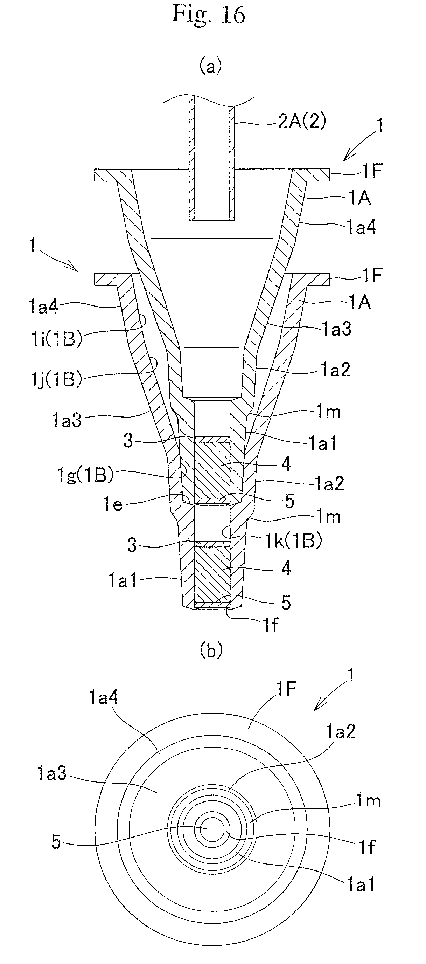

The stationary phase extraction cartridge 1 may be constituted by a syringe type stationary phase extraction cartridge capable of injecting a lot of specimens as shown in FIGS. 16 (a), (b). In the stationary phase extraction cartridge 1, the outer surface of the cartridge body 1A is constituted by a first tapered surface 1a4 having a diameter decreased toward the lower side, a second tapered surface 1a3 having a diameter decreased toward the lower side from the lower end of the first tapered surface 1a4 (having a larger oblique than one of the first tapered surface 1a4), a third tapered surface 1a2 extending downward from the lower end of the second tapered surface 1a3 and having a diameter decreased toward the lower side in the almost perpendicular direction, and a fourth tapered surface 1a1 extending downward from the step part 1m formed on the tapered surface of the lower end of the third tapered surface 1a2 and having a diameter decreased toward the lower side in sequence from the above. However, the other constitution may be used. Also, the inner surface of the cartridge body 1A is constituted by a first tapered surface 1i having a diameter decreased toward the lower side, a second tapered surface 1j having a diameter decreased toward the lower side from the lower end of the first tapered surface 1i (having a larger oblique than one of the tapered surface 1i), a third tapered surface 1g forming the fitting part from the lower end of the second tapered surface 1j, and a first straight surface 1k extending downward from the step part 1e of the lower end of the third tapered surface 1g in sequence from the above. However, the other constitution may be used. In this case, the outflow side frit 5 can be held by the stopper part 1f formed at the lower end so as to be projected inward.

## Claims

1. A stationary phase extraction cartridge provided with an inflow side frit, a stationary phase filler and an outflow side frit from the upper side in a cylindrical cartridge body having an opened upper end and an opened lower end, the stationary phase extraction cartridge comprising:
a stopper part formed on the inner surface of the lower side of the cartridge body and projected inward to continuously or intermittently support the outer peripheral edge of the outflow side frit, or a holding part formed on the inner surface of the lower side of the cartridge body and constituting a tapered part having a diameter decreased toward the lower side to hold the outflow side frit; and
a fitting part formed on the cartridge body and capable of holding the inserted state of the lower end of the other cartridge body inserted from the upper end of the cartridge body to a specified position,
wherein the fitting part comprises an inside tapered surface formed in at least a specific range of the inner surface of the cartridge body on the inserted side and having a diameter increased toward the upper side and an outside tapered surface formed in at least a specific range of the outer surface of the cartridge body on the insert side and having a diameter increased toward the upper side, and both the inside tapered surface and the outside tapered surface have substantially the same oblique angle.

2. The stationary phase extraction cartridge according to claim 1, wherein the inner surface of the cartridge body located below is continued to the inner surface of the cartridge body located above so as to be substantially flush therewith in the fitted state of the two cartridge bodies.

3. The stationary phase extraction cartridge according to claims 1 or 2, wherein the cartridge body comprises a lower side portion capable of being inserted and fitted into the other cartridge body and an upper side portion having an outside diameter projected outward from the lower side portion, and wherein an abutting step part for regulating the inserted position of the cartridge body located above is formed on the inner surface of the cartridge body located below so that a clearance is formed between a step part and the upper end of the cartridge body located below in the fitted state of the two cartridge bodies, the step part formed at a boundary part of the lower side portion and upper side portion of the cartridge body located above.

4. The stationary phase extraction cartridge according to claim 3, wherein the upper end opening of the cartridge body is set larger than the outside diameter of the lower end of the cartridge body,
wherein the inner surface of the cartridge body between the upper end opening thereof and the abutting step part located below is formed into a tapered surface having an inner diameter decreased toward the abutting step part, and
wherein the outer surface of the lower side portion of the cartridge body is formed into a tapered surface having an outside diameter increased toward the step part from the lower end.

5. The stationary phase extraction cartridge according to claim 1, wherein the stopper part includes a plurality of projected parts projected inward at a prescribed interval in the circumferential direction of the inner surface of the lower end of the cartridge body.

6. The stationary phase extraction cartridge according to claim 5, further comprising a short cylindrical lower end portion provided with the stopper part and removably attached to the lower end of the cartridge body.

7. The stationary phase extraction cartridge according to any one of claims 1 to 6, further comprising a flange part formed on the upper end of the cartridge body.
